# FASCICULE DE BREVET EUROPEEN

(11) **EP 3 548 997 B1**
(45) Date de publication et mention de la délivrance du brevet: **19.04.2023**
(21) Numéro de dépôt: 17812008.5
(22) Date de dépôt: 20.11.2017
(51) Int. Cl.: G06F 3/0346, H04N 21/422, H04N 21/438, H04N 21/472, H04N 21/442, G06F 3/01

(54) **PROCÉDÉ DE GESTION DE LA RÉCEPTION DE CONTENUS NUMÉRIQUES PAR UN DISPOSITIF DE GESTION**
VERFAHREN ZUR VERWALTUNG DES EMPFANGS VON DIGITALEM INHALT DURCH EINE VERWALTUNGSVORRICHTUNG
METHOD FOR MANAGING THE RECEPTION OF DIGITAL CONTENTS BY A MANAGEMENT DEVICE

(30) Priorité: 01.12.2016 FR 1661798
(43) Date de publication de la demande: 09.10.2019
(73) Titulaire: Orange, 92130 Issy-les-Moulineaux (FR)
(72) Inventeur: FONTAINE, Fabrice, 92326 Châtillon Cedex (FR); MARCHAND, Hervé, 92326 Châtillon Cedex (FR)
(86) Numéro de dépôt international: PCT/FR2017/053177
(87) Numéro de publication internationale: WO 2018/100264

(56) Documents cités:
- WO-A1-2008/002312
- WO-A1-2008/002312
- US-A1- 2004 218 104
- US-A1- 2011 058 107

## Description

### Domaine technique

L'invention se rapporte au domaine des télécommunications.

Plus particulièrement, l'invention se rapporte à un procédé de gestion de la réception de contenus multimédias par un dispositif de gestion en vue d'une restitution sur un dispositif de restitution.

On entend par contenus multimédias tout contenu audio et/ou vidéo tel que des chaînes de télévision aussi appelée chaînes audiovisuelles.

Le dispositif de gestion visé est un dispositif à part entière apte à être connecté à un dispositif de restitution. Ce dispositif de gestion peut aussi être intégré dans un autre dispositif ; dans cette configuration, cet autre dispositif est par exemple un téléviseur, un décodeur de télévision numérique, une passerelle domestique, etc.

### Etat de la technique

On a vu récemment se développer de nouveaux modes de commande pour le contrôle des appareils audiovisuels. Le moyen de naviguer consiste en général à utiliser les flèches de direction d'une télécommande, notamment utiliser les boutons P+ et P- pour naviguer, ou « zapper », très simplement entre les chaînes audiovisuelles proposées sur interface graphique restituée sur le dispositif de restitution.

Le temps nécessaire pour réaliser un zapping par touche P+ / P- sur un décodeur de télévision numérique connecté sur un réseau par exemple de type IPTV (de l'anglais « Internet Protocol Télévision ») est relativement important, de l'ordre de 3 secondes environ. En effet, pour accéder à un flux diffusé en multicast, le décodeur doit s'abonner à ce flux, par exemple à travers un protocole IGMP (sigle anglo saxon de « Internet Group Management Protocol »). Le temps nécessaire à l'affichage du flux sur le téléviseur dépend alors de nombreux facteurs comme la taille des groupes d'images GOP (sigle anglo-saxon de « Group Of Pictures ») conformément à la norme MPEG (sigle anglo-saxon de « Moving Picture Experts Group ») ou la taille de la mémoire tampon (aussi appelé Buffer) présente dans le décodeur.

Certaines techniques permettent de réduire considérablement ce temps d'attente comme la technique appelée « fast zapping » par l'homme du métier. Cette technique disponible pour des terminaux disposant d'une bande passante très importante consiste à recevoir plusieurs flux de données en même temps ; plus particulièrement, le principe consiste à accéder (ou « à s'abonner ») automatiquement à une chaîne sélectionnée et aussi à d'autres chaînes par exemple aux chaînes adjacentes, à savoir la chaine précédente et la chaine suivante. Le décodeur reçoit ensuite les flux de données correspondants aux trois chaînes, et décode les flux de données correspondants. A ce stade, la chaîne sélectionnée est restituée et les autres données correspondantes aux chaînes adjacentes sont reçues et prêtes à être restituée sur requête. Cette technique est décrite dans la demande de brevet WO 2008/002312 A1 (THOMSON LICENSING [FR] publiée le 3 janvier 2008.

Aussi, si le décodeur reçoit une commande de changement de chaîne, et que la chaîne visée fait partie des chaînes adjacentes ; dans ce cas de figure, cette chaîne télévisée est restituée sans nécessiter d'envoi d'une commande d'abonnement sur le réseau. Il en résulte un changement de chaîne (aussi appelé zapping) très rapide.

Cette technique dite du « fast zapping » est cependant très consommatrice de ressource réseau, en particulier de bande passante ; pour résoudre ce problème de consommation, suite à une détection d'une inactivité de l'utilisateur, par exemple parce que l'utilisateur regarde la même chaîne depuis une certaine durée, par exemple 30 secondes, le décodeur se désabonne des chaînes adjacentes et ne les reçoit plus. En d'autres mots, en reprenant l'exemple décrit ci-dessus, les flux de données représentatifs des chaînes adjacentes ne sont plus reçus. Dans cette configuration, après expiration de la durée (30 secondes dans notre exemple), si l'utilisateur souhaite accéder à une chaîne adjacente de la chaîne restituée, le décodeur doit se réabonner à la chaîne en question et donc attendre quelques secondes (3 secondes dans notre exemple) avant que le contenu ne soit restitué.

L'invention offre une solution ne présentant pas les inconvénients de l'état de la technique.

### L'invention

A cet effet, selon un aspect fonctionnel, l'invention a pour objet un procédé de gestion de la réception de contenus numériques par un dispositif de gestion selon la revendication 1.

La solution propose déclencher automatiquement la réception (appelée aussi l'abonnement par l'homme du métier) des contenus secondaires, typiquement des chaînes adjacentes, ou des chaînes préférées, en fonction d'une activité détectée en liaison avec le dispositif de commande ; l'activité détectée pouvant être interprétée comme une intention probable de changement de chaîne.

Aussi, la solution évite de s'abonner aux chaînes secondaires à chaque demande d'accès à un contenu principal comme c'est le cas dans l'état de la technique. En prenant l'exemple de chaînes télévisées, lorsqu'un utilisateur sélectionne une chaîne, grâce à l'invention deux variantes sont possibles :
a. soit le dispositif de gestion demande à accès à la fois au contenu principal et aux contenus secondaires.
b. soit il se contente de requérir un accès au contenu principal et requiert un accès aux chaînes secondaires uniquement en fonction de l'activité du dispositif de commande.

Les contenus secondaires sont reçus pendant une durée (ou plage temporelle) de réception donnée. Ce mode évite de recevoir des contenus secondaires inutilement en particulier lorsque l'utilisateur n'a pas l'intention de zapper.

Selon un mode de réalisation de l'invention, qui pourra être mis en oeuvre alternativement ou cumulativement avec le précédent, si une durée est en cours d'exécution pour un contenu secondaire, une détection d'une activité du dispositif de commande pendant cette durée entraîne une mise à jour de la durée de réception pour ce contenu secondaire. En effet, un mouvement détecté pendant une durée en cours d'exécution (ou en cours d'écoulement) est le témoin d'une certaine instabilité de l'utilisateur dans le choix de la chaîne à restituer. Cela se produit souvent en début de restitution d'un contenu lorsque par exemple l'utilisateur cherche un programme télévisé qui lui convient. Dans cette configuration, le dispositif augmente la durée initiale de réception des flux secondaires.

Selon un autre mode de réalisation, qui pourra être mis en oeuvre alternativement ou cumulativement avec le précédent, l'activité est un mouvement du dispositif de commande. Cet autre mode est avantageux car tout mouvement de la télécommande, et donc probablement de la main de l'utilisateur, déclenche systématiquement une demande de réception des contenus secondaires.

Par «mouvement du dispositif de commande», on entend toute information représentative d'un mouvement produit par un utilisateur, plus particulièrement sa main, dans l'espace. On rappelle que, classiquement, le mouvement d'un solide peut se caractériser par un ensemble de vecteurs associés audit solide (vecteurs de position, de vitesse, d'accélération). Par exemple, dans le contexte qui nous intéresse, il peut s'agir d'un mouvement circulaire, de translation, etc. accompagné d'une vitesse et d'une accélération, uniformes ou non. Aussi, certaines activités peuvent être exclues telles qu'une chute du dispositif de commande. Un accéléromètre présent dans le dispositif de commande peut permettre une distinction entre une chute et un mouvement normal du dispositif de commande.

Selon un autre mode de réalisation, qui pourra être mis en oeuvre alternativement ou cumulativement avec les précédents, l'activité est un appui sur une touche du dispositif de commande ; la touche est par exemple un appui sur la touche volume. Cet autre mode est avantageux car moins coûteux en terme de ressources réseaux que le mode précédent ; en effet, le déclenchement ne se base pas uniquement sur un mouvement mais aussi sur un appui sur une touche de la télécommande ; l'appui sur une touche peut être interprété comme une intention très probable de modifier un paramètre lié à la restitution, ce paramètre pouvant être un changement de contenu, par exemple un changement de chaîne télévisée.

L'activité ne se limite pas aux exemples donnés ci-dessus. Des capteurs installés sur la télécommande peuvent aussi détecter le déplacement d'un utilisateur par rapport au dispositif de commande. Par exemple l'approche d'un doigt de l'utilisateur vers une touche de la télécommande, en particulier la touche ayant pour fonction un changement de chaîne, fait partie d'une activité liée au dispositif de commande.

Selon un aspect matériel, l'invention se rapporte à un dispositif de gestion de la réception de contenus numériques selon la revendication 5.

Selon un autre aspect matériel, l'invention se rapporte à un décodeur comprenant un dispositif de gestion tel que défini ci-dessus.

Selon un autre aspect matériel, l'invention se rapporte à un programme d'ordinateur apte à être mis en oeuvre sur un dispositif de gestion tel que défini ci-dessus, le programme comprenant des instructions de code qui, lorsque le programme est exécuté par un processeur, réalise les étapes définies du procédé défini ci-dessus.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

Le support en question peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 est une vue schématique d'un décodeur selon un mode de réalisation.
Les figures 3 à 5 sont des vues schématiques de modes de réalisation. Ces modes peuvent être mis en oeuvre isolément ou en combinaison.

### Description détaillée d'un (ou d') exemple(s) de réalisation illustrant l'invention

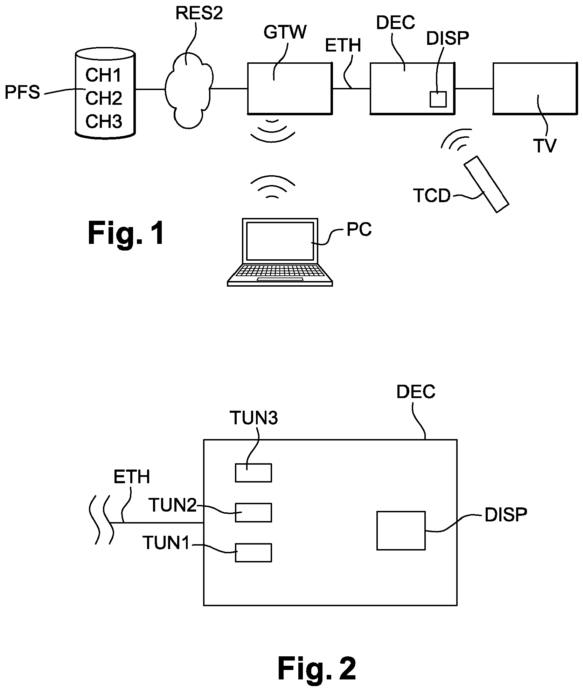

La figure 1 représente un système SYS comprenant un dispositif de commande TCD, un dispositif DEC, une télévision TV, une plateforme de services PF.

Dans notre exemple, le dispositif DEC est un décodeur. Ce décodeur communique avec la plateforme de services PFS via un réseau de communication RES1. Dans notre exemple, cette communication s'effectue via une passerelle domestique GTW (ou routeur).

Dans notre exemple, la plateforme de services PFS comprend une pluralité de services tels que l'accès à des chaînes de télévision, un accès à des

La figure 2 est une vue schématique d'un décodeur selon un mode de réalisation.

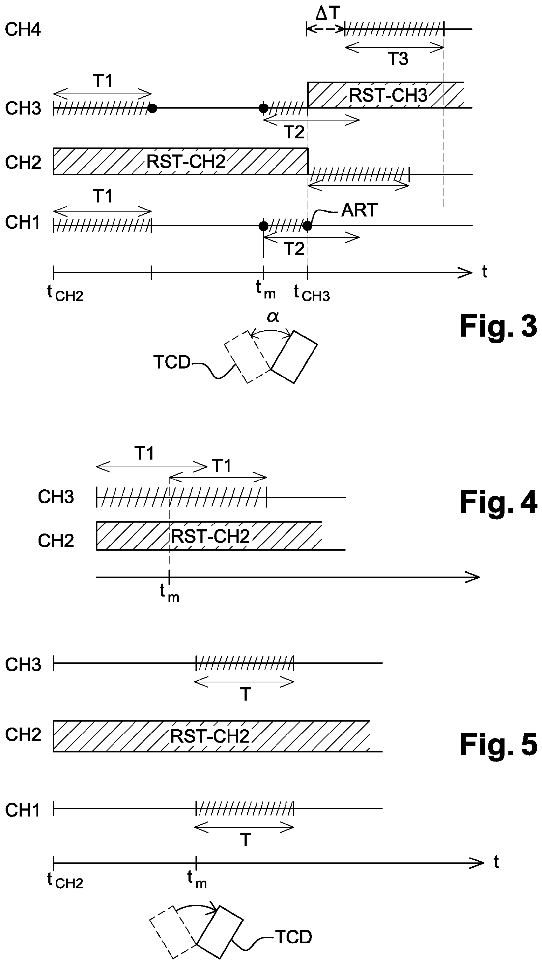

Les figures 3 à 5 sont des vues schématiques de modes de réalisation. Ces modes peuvent être mis en oeuvre isolément ou en combinaison.

### Description détaillée d'un (ou d') exemple(s) de réalisation illustrant l'invention

La figure 1 représente un système SYS comprenant un dispositif de commande TCD, un dispositif DEC, une télévision TV, une plateforme de services PF.

Dans notre exemple, le dispositif DEC est un décodeur. Ce décodeur communique avec la plateforme de services PFS via un réseau de communication RES1. Dans notre exemple, cette communication s'effectue via une passerelle domestique GTW (ou routeur).

Dans notre exemple, la plateforme de services PFS comprend une pluralité de services tels que l'accès à des chaînes de télévision, un accès à des contenus multimédias (vidéo à la demande, TV à la demande, etc.), de jeux en ligne, etc.

La plateforme PFS pourrait aussi être éclatée de manière à offrir des services répartis dans le réseau RES1.

Dans notre exemple, le dispositif commande TCD est une télécommande TCD qui permet de commander le décodeur DEC. Une commande est par exemple un accès aux chaînes de télévision. Grâce à la télécommande, l'utilisateur peut zapper d'une chaîne vers une autre.

Le décodeur DEC et la passerelle GTW ont une architecture matérielle équivalente à un ordinateur ; l'architecture d'un ordinateur ne sera pas décrite plus en détails ici pour simplifier l'exposé de l'invention.

En référence à la figure 1, le décodeur DEC comprend un dispositif de gestion DISP apte à requérir la réception de (l'homme du métier utilise aussi l'expression « apte à s'abonner à») plusieurs flux de données multimédia illustrés par des chaînes de télévision dans notre exemple de réalisation. Dans notre exemple, ce dispositif de gestion DISP est un programme d'ordinateur stocké dans une mémoire morte du décodeur DEC.

Pour recevoir plusieurs flux de données, en référence à la figure 2, dans notre exemple, le décodeur DEC est équipé de plusieurs démodulateurs (aussi appelés tuners par l'homme du métier). Plus particulièrement, ce dispositif de gestion DISP est apte à requérir un accès à une chaîne principale sélectionnée via la télécommande TCD et à requérir la réception d'autres chaînes CH typiquement les chaînes adjacentes CH- et CH+, dites chaînes secondaires. La requête d'accès à la chaîne principale ou aux chaînes secondaires peuvent se faire simultanément ou à des instants différents.

Ces demandes d'accès, appelées aussi abonnements, aux chaînes concernées, faites par le décodeur, sous-entendu le dispositif de gestion DISP, sont dans notre exemple les chaînes CH-/CH/CH+, CH- et CH+ désignant les chaînes adjacentes de la chaîne restituées CH.

Concrètement, le décodeur DEC requiert
- la réception d'un premier flux principal, (on dit aussi « s'abonne au premier flux ») ; celui-ci sera restitué sur l'écran TV,
- ainsi que la réception de flux secondaires à savoir les chaînes adjacentes CH- et CH+.

Après réception, le décodeur DEC décode les trois flux, par exemple en même temps. A ce stade, une chaîne de télévision est reçue et restituée, et deux autres chaînes sont reçues par le décodeur prêtes à être restituées sur requête. Après réception, les chaînes secondaires sont stockées dans une mémoire tampon présente dans le décodeur. De cette manière, si le décodeur DEC reçoit une commande de changement de chaîne CH+, le décodeur requiert la restitution de la chaîne CH+ en lieu et place de la chaîne CH sans nécessiter l'envoi d'une requête d'abonnement à la chaîne demandée CH+ auprès de la plateforme PFS. Cette méthode accélère la restitution d'une chaîne.

Dans notre exemple, la télécommande TCD communique avec le décodeur DEC via un premier réseau RES1 qui peut être filaire (USB, Ethernet, etc.) ou non filaire par exemple de type Wifi, ZigBee. Dans notre exemple, la télécommande et le décodeur sont équipés de modules Zigbee respectifs.

Rappelons que Zigbee est une technologie sans fil radio de basse puissance ; il est possible d'échanger sur un canal radio des messages conformes au protocole ZigBee. Précisons que le protocole ZigBee est un protocole de haut niveau permettant la communication de petites radios, à consommation réduite, basée sur la norme IEEE 802.15.4 pour les réseaux à dimension personnelle (Wireless Personal Area Networks : WPAN).

Dans notre exemple, le décodeur DEC est relié par un câble CBL à la télévision TV. Le câble est par exemple un câble HDMI. Dans notre exemple, le décodeur est relié à la passerelle via un câble Ethernet. La passerelle est connectée à un réseau étendu WAN par exemple Internet.

La télécommande TCD inclut des codes touches et inclut aussi au moins un détecteur de mouvement capable de détecter un mouvement de la télécommande. Un détecteur peut être l'un des suivantes : un gyroscope GRS ; un accéléromètre ACC, etc.

Dans l'état actuel de la technique, un abonnement à une chaîne secondaire s'estompe si le décodeur ne reçoit plus de commande de changement de chaîne au-delà d'une durée donnée. En conséquence, si l'utilisateur zappe vers une autre chaîne, par exemple une chaîne adjacente, cela a pour conséquence un temps d'attente non négligeable ; en effet le décodeur DEC doit de nouveau se réabonner à la chaîne demandée ; cela implique une émission d'une requête de demande d'accès (ou abonnement) au contenu, et une réception du contenu. Cette communication avec le fournisseur de contenus retarde la restitution du contenu.

L'invention propose de diminuer ce temps d'attente même lorsque le décodeur n'est plus abonné aux chaînes adjacentes. Pour cela, selon l'invention, une détection d'une activité liée à la télécommande, par exemple un mouvement de la télécommande, déclenche automatiquement un abonnement à au moins une autre chaîne que celle qui est restituée. La détection du mouvement est interprétée comme une intention probable de changement de chaînes.

La figure 3 illustre un mode de réalisation du procédé de l'invention. Cette figure 3 est une vue schématique d'abonnements à différentes chaînes, dans notre exemple à trois chaînes CH1, CH2 et CH3. Trois axes sont représentés relativement aux trois chaînes respectivement couplés à un axe temporel « t » ; sur ces trois axes apparaissent la réception des chaînes par les tuners concernés du décodeur et la restitution (RST-CHx) d'un contenu CHx.

Lors d'une première étape, la deuxième chaîne CH2 est sélectionnée à un instant tCH2.

Lors d'une deuxième étape, suite à la sélection, le décodeur DEC s'abonne à la chaîne CH2, et optionnellement aux chaînes adjacentes CH1 et CH3 et reçoit les flux correspondants simultanément.

Lors d'une troisième étape, la chaîne CH2 est reçue et restituée RST-CH2 (représentée par un bloc rectangulaire sur fond gris), et les chaînes adjacentes CH1 et CH3 sont reçues sans être restituées (parties hachurées sur les axes temporels dédiés aux chaînes adjacentes) pendant une durée T1.

A l'expiration de la durée T1, les abonnements aux flux relatifs aux chaînes adjacentes expirent. Le décodeur ne reçoit donc plus les chaînes adjacentes CH1 et CH3 et continue de restituer RST la chaîne CH2.

A un instant ultérieur Tm, un mouvement MVT de la télécommande est détecté.

Suite à cette détection, le décodeur DEC s'abonne de nouveau aux chaînes adjacentes CH1 et CH3 tout en maintenant la restitution de la chaîne CH2. On voit sur la figure 3, des parties hachurées, similaires à celles décrites ci-dessus, représentatives de la réception par le décodeur DEC, ou plus précisément par les tuners concernés, des chaînes adjacentes CH1 et CH3. Une nouvelle durée T2 est prévue pour la réception. Dans notre exemple les durées T1 et T2 sont égales mais pourraient être différentes.

On suppose ensuite que pendant cette durée T2, à un instant tCH3 l'utilisateur sélectionne la chaîne CH3 via la télécommande TCD. Le décodeur DEC reçoit un signal représentatif de cette sélection issu de la télécommande TCD.

Lors d'une quatrième étape, comme le décodeur est abonné à cette chaîne et que la durée n'a pas expiré, le décodeur restitue la chaîne CH3 sans avoir à requérir un abonnement à cette chaîne auprès de la plateforme PFS. On comprend ici que la restitution est rapide car le flux de données représentatif de la chaîne est déjà en cours de réception par un tuner du décodeur DEC.

Dans notre exemple, lors de cette quatrième étape, à l'instant tCH3, le décodeur DEC requiert l'arrêt ART de la chaîne CH1 car celle-ci n'est pas adjacente à la chaîne CH3. Selon une variante, avec un décodeur disposant d'un nombre de tuners supérieur, par exemple huit tuners, le décodeur poursuivrait la réception de la chaîne CH1.

Dans notre exemple, le décodeur DEC s'abonne aux chaînes adjacentes à cette chaîne CH3 ; cet abonnement n'a pas lieu si une chaîne a fait déjà l'objet d'un abonnement et qu'une réception de cette chaîne est en cours. En l'espèce, le décodeur DEC étant déjà abonné à la chaîne CH2, seul un abonnement à la chaîne CH4 a lieu. Cet abonnement nécessite une durée ΔT pour requérir un accès à la chaîne CH4 et la recevoir. A ce stade, la chaîne CH3 est reçue et restituée et les chaînes CH2 et CH4 sont reçues et ne sont pas restituées.

On s'aperçoit dans l'exemple décrit en référence à cette figure 3 que les durées T3 relativement aux chaînes CH2 et CH4 expirent à des instants différents du fait de la durée ΔT que nécessite l'abonnement à la chaîne CH4. Cependant, un mécanisme peut être mis en oeuvre pour que ces durées expirent au même instant. Aussi, le nombre de tuners pourrait être supérieur à trois ; dans ce cas, en supposant que la réception de flux secondaires s'effectue par plus de trois tuners, par exemple huit tuners, la chaîne CH4 aurait déjà fait l'objet d'un abonnement ; le décalage temporel n'aurait donc pas eu lieu.

L'invention ne se limite pas au mode de réalisation décrit ci-dessus. Les chaînes auxquelles s'abonnent le décodeur DEC peuvent être des chaînes autres que les chaînes adjacentes ; celles-ci peuvent être des chaînes préférées de l'utilisateur ou d'un groupe d'utilisateur. Celles-ci peuvent être définies par l'utilisateur ou déduites selon un historique des chaînes sélectionnées.

Dans notre exemple, les durées T1 et T2 sont les mêmes. Cependant, des durées différentes peuvent être mises en oeuvre.

Selon un autre mode de réalisation de l'invention, si la durée de réception donnée n'a pas expiré, un mouvement de la télécommande entraîne une mise à jour de la durée de réception. La figure 4 illustre ce cas. Pour simplifier l'exposé, considérons qu'une chaîne CH2 est sélectionnée en vue d'une restitution et que la chaîne CH3 est une chaîne secondaire. On suppose que le décodeur s'est abonné à ces deux chaînes CH2 et CH3. Après abonnement, la chaîne CH2 est reçue par un tuner et restituée RST-CH2 ; et que la chaîne CH3 est reçue par un autre tuner (partie hachurée) ; Une durée de réception T1 est prévue pour la réception de la chaîne CH3. On considère ensuite qu'au cours de cette durée T1 est détecté un mouvement de la télécommande TCD à l'instant tm ; A cet instant, le décodeur DEC met à jour la durée T1 en la réinitialisant ; en d'autres mots, la durée T1 recommence depuis son début. En effet, un mouvement détecté peu de temps après une détection de chaîne indique une instabilité de l'utilisateur dans son choix quant à la chaîne à sélectionner pour la restitution. Cela se produit souvent en début de restitution lorsque l'utilisateur cherche un programme télévisé qui lui convient. Dans cette configuration, le décodeur poursuit la réception des flux et la durée de réception est rallongée d'une durée supplémentaire. Si la durée a expiré, les flux sont de nouveau reçus pendant une durée donnée.

Selon un autre mode de réalisation, la durée T n'est pas initiée à la sélection d'une chaîne mais uniquement lors d'une détection d'une activité de la télécommande TCD. Ce mode est illustré sur la figure 5. Sur cette figure, la chaîne CH2 est sélectionnée à l'instant tCH2. Plus tard, lors de la restitution de CH2, un mouvement de la télécommande est détecté à un instant tm. A cet instant, le décodeur requiert la réception des contenus secondaires, adjacents dans notre exemple, à savoir les chaînes CH1 et CH3 pendant une durée T.

A noter qu'un module peut être mise en oeuvre sous forme logicielle (ou »software »), auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant de type FPGA (Field Programmable Gate Array).

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et le dispositif pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention.

## Revendications

1. Procédé de gestion de la réception de contenus numériques (CH1-CH3) par un dispositif de gestion (DISP) apte à recevoir une commande de sélection d'un contenu (CH2), dit contenu principal, issue d'un dispositif de commande (TCD), le dispositif de gestion étant apte à requérir un accès au contenu principal (CH2) et d'autres contenus numériques (CH1 ;CH3), dits contenus secondaires, à recevoir les flux de données représentatifs des contenus demandés (CH1-CH3), et à requérir la restitution du contenu principal (CH2), comprenant les étapes suivantes
a. réception du contenu principal et des contenus secondaires, les contenus secondaires étant reçus pendant une durée donnée (T1,T2),
b. et **caractérisé en ce qu'** au cours de la restitution du contenu principal, une détection d'une activité liée au dispositif de commande (TCD), distincte d'une commande de sélection d'un contenu, déclenche une requête apte à requérir, si la durée donnée a expiré, la réception des mêmes contenus secondaires (CH1 ;CH3).

2. Procédé de gestion selon la revendication 1 , **caractérisé en ce que** si une durée est en cours d'exécution pour un contenu secondaire, une détection d'une activité du dispositif de commande pendant cette durée entraîne une mise à jour de la durée de réception pour ce contenu secondaire.

3. Procédé de gestion selon la revendication 1, **caractérisé en ce que** l'activité est un mouvement du dispositif de commande.

4. Procédé de gestion selon la revendication 1, **caractérisé en ce que** le dispositif de sélection comprend des touches de sélection et **en ce que** l'activité est un appui sur une touche du dispositif de commande.

5. Dispositif de gestion (DISP) de la réception de contenus numériques comprenant un module de réception apte à recevoir une commande de sélection d'un contenu , dit contenu principal, issue d'un dispositif de commande, un module de demande apte à requérir l'accès au contenu principal et à d'autres contenus numériques, dits contenus secondaires, un module de réception apte à recevoir les flux de données représentatifs des contenus demandés et un module de restitution apte à requérir la restitution du contenu principal, comprenant un processeur configuré pour :
a. recevoir le contenu principal et les contenus secondaires, les contenus secondaires étant reçus pendant une durée donnée (T1,T2),
b. et **caractérisé en ce qu'** au cours de la restitution du contenu principal, détecter une activité liée au dispositif de commande distincte d'une commande de sélection d'un contenu, et déclencher une requête apte à requérir, si la durée donnée a expiré, la réception des mêmes contenus secondaires.

6. Décodeur (DEC) comprend un dispositif de gestion (DISP) tel que défini dans la revendication 5.

7. Programme d'ordinateur apte à être mis en oeuvre sur un dispositif de gestion (DISP) tel que défini dans la revendication 5, le programme comprenant des instructions de code qui, lorsque le programme est exécuté par un processeur, réalise les étapes définies dans la revendication 1.

## Patentansprüche

1. Verfahren zur Verwaltung des Empfangs digitaler Inhalte (CH1-CH3) durch eine Verwaltungsvorrichtung (DISP), die geeignet ist, einen von einer Steuerungsvorrichtung (TCD) stammenden Befehl zur Auswahl eines Hauptinhalts (CH2) zu empfangen, wobei die Verwaltungsvorrichtung geeignet ist, einen Zugriff auf den Hauptinhalt (CH2) und andere, sekundäre digitale Inhalte (CH1; CH3) anzufordern, die Datenströme zu empfangen, die für die angeforderten Inhalte (CH1-CH3) repräsentativ sind, und die Wiedergabe de Hauptinhalts (CH2) anzufordern, umfassend die folgenden Schritte
a. Empfangen des Hauptinhalts und der sekundären Inhalte, wobei die sekundären Inhalte über einen bestimmten Zeitraum (T1, T2) empfangen werden,
b. und **dadurch gekennzeichnet, dass** im Verlauf der Wiedergabe des Hauptinhalts eine Detektion einer Aktivität, die mit der Steuerungsvorrichtung (TCD) in Verbindung steht, die von einem Befehl zur Auswahl eines Inhalts verschieden ist, eine Anforderung auslöst, die geeignet ist, den Empfang der sekundären Inhalte (CH1; CH3) anzufordern, wenn der bestimmte Zeitraum abgelaufen ist.

2. Verwaltungsverfahren nach Anspruch 1, **dadurch gekennzeichnet, dass**, wenn ein Zeitraum für einen sekundären Inhalt ausgeführt wird, eine Detektion einer Aktivität der Steuerungsvorrichtung während dieses Zeitraums eine Aktualisierung des Empfangszeitraums für diesen sekundären Inhalt zur Folge hat.

3. Verwaltungsverfahren nach Anspruch 1, **dadurch gekennzeichnet, dass** die Aktivität eine Bewegung der Steuerungsvorrichtung ist.

4. Verwaltungsverfahren nach Anspruch 1, **dadurch gekennzeichnet, dass** die Auswahlvorrichtung Auswahltasten umfasst, und dadurch, dass die Aktivität ein Drücken auf eine Taste der Steuerungsvorrichtung ist.

5. Vorrichtung zur Verwaltung (DISP) des Empfangs digitaler Inhalte umfassend ein Empfangsmodul, das geeignet ist, einen von einer Steuerungsvorrichtung stammenden Befehl zur Auswahl eines Hauptinhalts zu empfangen, ein Anfragemodul, das geeignet ist, den Zugriff auf den Hauptinhalt und andere, sekundäre digitale Inhalte anzufordern, ein Empfangsmodul, das geeignet ist, die Datenströme zu empfangen, die für die angefragten Inhalte repräsentativ sind, und ein Wiedergabemodul, das geeignet ist, die Wiedergabe des Hauptinhalts anzufordern, umfassend einen Prozessor, der für folgendes ausgebildet ist:
a. Empfangen des Hauptinhalts und der sekundären Inhalte, wobei die sekundären Inhalte über einen bestimmten Zeitraum (T1, T2) empfangen werden,
b. und **dadurch gekennzeichnet, dass** im Verlauf der Wiedergabe des Hauptinhalts Detektieren einer Aktivität in Verbindung mit der Steuerungsvorrichtung, die von einem Befehl zur Auswahl eines Inhalts verschieden ist, und Auslösen einer Anforderung, die geeignet ist, den Empfang derselben sekundären Inhalte anzufordern, wenn der bestimmte Zeitraum abgelaufen ist.

6. Decodierer (DEC) umfasst eine Verwaltungsvorrichtung (DISP) nach Anspruch 5.

7. Computerprogramm, das geeignet ist, auf einer Verwaltungsvorrichtung (DISP) nach Anspruch 5 ausgeführt zu werden, wobei das Computerprogramm Code-Anweisungen umfasst, die, wenn das Programm von einem Prozessor ausgeführt wird, die in Anspruch 1 festgelegten Schritte durchführt.

## Claims

1. Method for managing the reception of digital contents (CH1-CH3) by a management device (DISP) capable of receiving a command for selection of a content (CH2), called main content, from a control device (TCD), the management device being capable of requesting access to the main content (CH2) and other digital contents (CH1; CH3), called secondary contents, of receiving the data streams representative of the requested contents (CH1-CH3), and of requesting the rendering of the main content (CH2), comprising the following steps:
a. reception of the main content and of the secondary contents, the secondary contents being received during a given period (T1, T2),
b. and **characterized in that** in the course of the rendering of the main content, a detection of an activity linked to the control device (TCD), distinct from a content selection command, triggers a request capable of requesting, if the given period has expired, the reception of the same secondary contents (CH1; CH3).

2. Management method according to Claim 1, **characterized in that** if a period is in the course of execution for a secondary content, a detection of an activity of the control device during this period leads to an updating of the period of reception for this secondary content.

3. Management method according to Claim 1, **characterized in that** the activity is a movement of the control device.

4. Management method according to Claim 1, **characterized in that** the selection device comprises selection keys and **in that** the activity is a press on a key of the control device.

5. Device (DISP) for managing the reception of digital contents comprising a reception module capable of receiving a command for selection of a content, called main content, from a control device, a request module capable of requesting access to the main content and to other digital contents, called secondary contents, a reception module capable of receiving the data streams representative of the requested contents and a rendering module capable of requesting the rendering of the main content, comprising a processor configured to:
a. receive the main content and the secondary contents, the secondary contents being received during a given period (T1, T2),
b. and **characterized in that**, in the course of the rendering of the main content, detect an activity linked to the control device distinct from a content selection command, and trigger a request capable of requesting, if the give period has expired, the reception of the same secondary contents.

6. Decoder (DEC) comprises a management device (DISP) as defined in Claim 5.

7. Computer program capable of being implemented on a management device (DISP) as defined in Claim 5, the program comprising code instructions which, when the program is executed by a processor, performs the steps defined in Claim 1.
